(19) Europäisches Patentamt / European Patent Office / Office européen des brevets

(11) **EP 4 182 652 B1**

(12) **FASCICULE DE BREVET EUROPEEN**

(45) Date de publication et mention
de la délivrance du brevet:
**28.01.2026 Bulletin 2026/05**

(21) Numéro de dépôt: **21755520.0**

(22) Date de dépôt: **16.07.2021**

(51) Classification Internationale des Brevets (IPC):
***G01L 3/10*** *(2006.01)* ***B62J 45/411*** *(2020.01)*

(52) Classification Coopérative des Brevets (CPC):
**B62M 6/55; B62J 45/411; B62J 45/421; G01L 3/102**

(86) Numéro de dépôt international:
**PCT/FR2021/051335**

(87) Numéro de publication internationale:
**WO 2022/018366 (27.01.2022 Gazette 2022/04)**

(54) **ORGANE D'ENTRAINEMENT DE CYCLE PRESENTANT UN CAPTEUR DE COUPLE**

FAHRRADANTRIEB MIT DREHMOMENTSENSOR

CYCLE DRIVE WITH TORQUE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2020 FR 2007608**

(43) Date de publication de la demande:
**24.05.2023 Bulletin 2023/21**

(73) Titulaire: **Moving Magnet Technologies**
**25000 Besançon (FR)**

(72) Inventeur: **KELTZ, Guillaume**
**25870 CHATILLON-LE-DUC (FR)**

(74) Mandataire: **IP Trust**
**2, rue de Clichy**
**75009 Paris (FR)**

(56) Documents cités:
**EP-A1- 2 743 166**    **WO-A1-2009/127263**
**WO-A1-2015/120644**    **WO-A2-99/30960**
**CN-A- 103 085 932**    **DE-A1- 10 301 610**
**DE-A1- 102007 062 156**    **DE-A1- 102018 220 387**
**JP-A- S5 946 526**    **US-A1- 2013 049 444**

EP 4 182 652 B1

**Description**

Domaine de l'invention

La présente invention concerne le domaine des cycles à assistance électrique (bicyclettes et tricycles à assistance électrique, plus communément appelés « vélos électriques ») et plus particulièrement celui des systèmes d'entrainement fournissant une information sur la puissance exercée par le cycliste sur les pédales et intégrant à cet effet un capteur de pédalage. Le capteur de pédalage est l'élément qui transmet au calculateur les informations sur le pédalage. Les capteurs de pédalage sont des éléments importants du vélo électrique dans la mesure où ils commandent le niveau d'assistance que le vélo va apporter et donc notamment son autonomie. Le cycliste adapte naturellement la vitesse du vélo pour avoir un pédalage ergonomique à dépense énergétique minimale.

Le moteur électrique démarre quand le cycliste appuie sur la pédale. Le capteur de pédalage mesure la déformation par torsion de l'axe du pédalier ou du moyeu de la roue entrainée pour en déduire le couple qu'il subit et donc la puissance de pédalage. Certains capteurs de torsion embarquent aussi un capteur de rotation et deviennent en combinant les deux informations des capteurs de puissance. En mesurant le couple et la vitesse de rotation les calculateurs sont capables d'analyser plus finement la situation et de donner une assistance plus proportionnelle en fonction de l'effort déployé.

Les principaux enjeux consistent à proposer une solution de capteur la mieux adaptée aux efforts fournis par le cycliste tout en visant une intégration mécanique optimale, en direction d'un encombrement, d'une masse et d'une consommation électrique réduits. Par ailleurs, la forte pénétration de ces systèmes sur le marché requiert des solutions de plus en plus adaptées à une fabrication en grande série (simplicité, fiabilité, standardisation...).

État de la technique

On connaît un grand nombre de capteurs de pédalage différents destinés à mesurer l'effort développé par un cycliste sur une pédale de cycle. Ces dispositifs utilisent des capteurs de types différents tels que les extensomètres formés par des jauges de contraintes appliquées sur des éléments du cycle tels que les roues, les manivelles du pédalier, l'axe de pédalier et les axes de pédale. Cependant, de tels capteurs ne sont plus adaptés aux enjeux actuels car ils nécessitent un contact électrique entre la partie mobile et la partie fixe nuisant à leur durée de vie et ne sont pas compatibles avec des processus de réalisation de grande série. Une alternative consiste alors à générer l'alimentation des jauges et la transmission de l'information de mesure sans fil complexifiant alors cette solution. De ce fait, les développements actuels se portent vers des solutions « sans contact » principalement sur base électromagnétique.

La demande de brevet WO2012010344A1 décrit un exemple connu de palier pour bicyclette. Le palier de pédalier comprend un arbre, un carter comportant deux paliers à roulement disposés aux extrémités latérales du carter pour monter l'arbre et un capteur de couple disposé à l'intérieur du carter pour détecter un couple exercé sur l'arbre. Ce capteur de couple comprend un capteur à effet Hall, un aimant permanent et un repère ferromagnétique. L'aimant permanent et le repère sont disposés radialement à distance l'un de l'autre sur l'arbre. Le capteur à effet Hall détecte un changement de position entre l'aimant permanent et le repère lors d'une torsion de l'arbre, laquelle est provoquée par le déclenchement du couple. La solution décrite dans cette demande de brevet présente l'inconvénient de générer une très faible variation de flux par degré de rotation de l'élément de torsion. Cette limitation nécessite d'avoir une grande déformation angulaire, typiquement supérieure à plusieurs degrés, pour avoir une sensibilité de mesure suffisante. Cela constitue une réelle limitation de cette solution dans le cas d'un capteur de couple pour un vélo électrique, en introduisant une sensation de jeu au pédalage qui n'est pas souhaitée.

La demande de brevet WO2012055129 décrit un autre exemple connu de capteur de couple et de vitesse pour bicyclette électrique qui comprend une tige centrale, un pédalier, une manivelle fixée sur la tige centrale et une cage composée d'un anneau extérieur et d'un anneau intérieur reliés l'un à l'autre par des barres de liaison radiales. L'anneau intérieur est fixé à la manivelle et l'anneau extérieur est fixé au pédalier. Deux aimants sont disposés sur l'anneau intérieur et leurs surfaces extérieures ont une polarité opposée. Un capteur à effet Hall est agencé pour faire face aux surfaces extérieures des aimants. Une bobine rotative et une bobine fixe sont agencées de manière coaxiale sur la tige centrale. Ces bobines permettent de transmettre le signal du capteur Hall qui est solidaire du pédalier et donc en rotation. Dans cette demande de brevet, la solution proposée présente deux inconvénients majeurs : d'une part la variation de flux par degré de rotation de l'élément de torsion générée par seulement deux aimants face à face est faible, ce qui nécessite une grande déformation angulaire de l'élément de torsion. D'autre part, l'élément de Hall est mobile, ce qui nécessite l'ajout notamment de bobines coaxiales permettant le transfert de signal entre la partie fixe et la partie en rotation du capteur. Ce système est coûteux et volumineux.

Le brevet européen EP2225543B1 décrit un pédalier présentant un système de détection de couple de rotation comprenant au moins une manivelle de pédalier, un arbre qui est monté solidaire en rotation avec ladite manivelle de pédalier, et un dispositif de détection de couple de rotation dans la zone de l'arbre. Le dispositif de détection de couple de rotation présente une aimantation directe de l'arbre et un détecteur, lequel détecte une variation de la première aimantation sur la base du couple de rotation introduit dans l'arbre. Cette solution qui utilise une aimantation d'un matériau ferromagnétique doux à rémanence faible génère de fait un champ magnétique (et par extension des variations de champ magnétique) très faibles et s'avère donc intrinsèquement très sensible au bruit de mesure ou aux perturbations magnétiques externes. Elle nécessite donc de multiples éléments de mesure sensibles à des champs magnétiques très faibles afin de compenser les perturbations voire l'emploi de pièces additionnelles de blindage ferromagnétique. De plus les éléments de mesure doivent être placés à une distance significative les uns des autres ce qui se traduit par un plus grand encombrement axial du capteur qui impacte le positionnement du moteur électrique d'assistance. Ceci requiert en complément une électronique de traitement du signal couteuse. Par ailleurs, les matériaux ferromagnétiques doux susceptibles d'être aimantés de manière stable et avec des niveaux de rémanence suffisants sont relativement rares et spécifiques, d'autant plus s'ils doivent présenter également les propriétés nécessaires à la fonctionnalité mécanique de cet axe. Celui-ci pourra donc s'avérer onéreux. La demande de brevet WO2009/127263 A1 décrit un autre exemple connu de capteur de couple et de vitesse pour bicyclette électrique correspondant au préambule de la revendication indépendante 1.

Inconvénients de l'art antérieur

Les solutions de l'art antérieur utilisent des principes qui permettent de mesurer une très faible variation de signal. Cela induit outre un encombrement important d'avoir une électronique de traitement du signal coûteuse et une grande sensibilité aux perturbations extérieures, ou nécessite de grandes déformations de l'axe de pédalier procurant des sensations utilisateur indésirables. De plus, certaines de ces solutions requièrent un élément de mesure en rotation, ce qui nécessite l'ajout d'un système de transmission de l'information qui est lui aussi coûteux. Enfin, les solutions de l'art antérieur comportent un nombre conséquent de pièces ce qui compromet la robustesse des pédaliers à capteur d'effort intégrés. En effet, il s'agit d'un organe mécanique essentiel d'une bicyclette, soumis à de multiples contraintes :

- Faible longueur de l'axe, imposée par l'encombrement latéral limité
- Section transversale limitée pour faciliter l'intégration dans le cadre d'une bicyclette
- Capacité à transmettre un couple instantané très élevé, sans rupture, par exemple lors de sauts en VTT
- Résistance aux salissures (poussières, sable, boue,...).

Solution apportée par l'invention afin de répondre aux inconvénients de l'art antérieur, la présente invention concerne selon son acception la plus générale un système d'entraînement de cycle présentant un capteur de couple, comprenant un axe de pédalier ou un moyeu relié à un plateau par un organe d'accouplement, d'entrainement et de mesure, présentant une première section solidaire en rotation dudit axe de pédalier ou moyeu et une seconde section reliée audit plateau, un aimant permanent supportée par l'une desdites sections ledit organe d'accouplement intégrant un dispositif de détection de couple où

- lesdites première et deuxième sections coopèrent par un élément déformable élastiquement,
- ledit dispositif de détection de couple comporte une sonde magnétosensible fixe mesurant un champ magnétique fonction de la position angulaire relative desdites première et deuxième sections et apte à convertir le dit champ magnétique en un signal électrique, la mesure de champ magnétique étant effectuée en une position axiale unique de la périphérie desdites première et deuxième sections de manière indépendante de la rotation dudit axe de pédalier ou moyeu. Le capteur de couple est un capteur angulaire comprend :

  - une première structure aimantée comprenant une pluralité de pôles aimantés, solidaire de l'une desdites sections, et
  - une seconde structure solidaire de la deuxième desdites sections, comprenant deux couronnes concentriques prolongées de dents imbriquées,
  - lesdites deux couronnes concentriques définissant au moins un entrefer dans lequel est placé au moins la sonde magnétosensible fournissant un signal électrique fonction du champ magnétique collecté.

Plus particulièrement, la structure aimantée comprend une pluralité d'aimants sous la forme d'une bague ou d'un disque aimanté présentant un pas polaire de 3 mm à 4 mm.

L'entrefer peut être réalisé par une structure collectrice constituée de deux pièces de fermeture de flux insérées entre les couronnes concentriques.

Selon un autre mode de réalisation, les première et deuxième sections coopèrent d'une part par ledit élément déformable élastiquement et d'autre part par une butée limitant la course angulaire résultant de la déformation élastique dudit moyen d'accouplement.

Plus particulièrement, l'élément déformable élastiquement est constitué d'un accouplement à mâchoires comprenant au moins un insert déformable élastiquement.

Dans une variante de réalisation, la première section est solidaire de l'élément déformable élastiquement coopérant avec un lardon de transmission traversant une lumière formée dans ladite première section pour former une butée mécanique, l'extrémité dudit lardon étant engagée dans une cannelure longitudinale de la deuxième section.

L'organe d'entrainement peut comporter un capteur additionnel disposé à proximité de ladite première structure aimantée coopérant avec la bague aimantée pour fournir une information de position ou de cadence.

La seconde section peut être reliée audit plateau par l'intermédiare d'une roue libre. L'invention concerne aussi un système mécatronique d'assistance au pédalage présentant un organe d'entrainement dans lequel le dispositif de détection de couple commande l'assistance électrique au pédalage fournie par un moteur électrique audit plateau ou au corps support de la roue arrière.

Plus particulièrement, le moteur électrique peut être relié mécaniquement audit plateau ou au corps support de la roue arrière par l'intermédiaire d'une roue libre.

En exemple, le moteur électrique est un moteur électrique sans balais à aimants permanents. Dans une variante de réalisation, les électroniques de commande du moteur électrique et du capteur angulaire peuvent être intégrées sur le même support.

En outre, la commande du moteur électrique peut être réalisée avec un capteur additionnel fournissant une information de position ou de cadence.

Le moteur électrique et le capteur de couple peuvent être intégrés dans un module présentant une connectique électrique simplifiée.

Dans une variante, le module est intégré à une roue et apte à être monté sur un cycle du commerce.

Description détaillée d'exemple de réalisation non limitatifs de l'invention

La présente invention sera mieux comprise à la lecture de la description qui suit, concernant des exemples non limitatifs de réalisation où :

> [Fig.1] La figure 1 représente une vue schématique de la chaîne cinématique sur un axe de pédalier.
> [Fig.2] La figure 2 représente une vue en perspective d'une première variante de réalisation d'un organe d'accouplement selon l'invention en cours d'assemblage.
> [Fig.3] La figure 3 représente une vue en perspective d'une première variante de réalisation d'un accouplement selon l'invention après assemblage.
> [Fig.4] La figure 4 représente une vue en perspective d'une première variante de réalisation d'un organe d'accouplement et des capteurs de couple et cadence associés pour pédalier selon l'invention en cours d'assemblage.
> [Fig.4B is] La figure 4B is représente une vue de côté en coupe du capteur de couple pour pédalier selon l'invention après assemblage.
> [Fig.5] La figure 5 représente une vue en coupe longitudinale d'une deuxième variante de réalisation d'un capteur de couple pour pédalier selon l'invention.
> [Fig.6] La figure 6 représente une vue en coupe transversale d'une deuxième variante de réalisation d'un capteur de couple pour pédalier selon l'invention.
> [Fig.7] La figure 7 représente une vue en perspective d'une deuxième variante de réalisation d'un capteur de couple pour pédalier selon l'invention.
> [Fig.8] La figure 8 représente une vue en perspective éclatée d'une deuxième variante de réalisation d'un capteur de couple pour pédalier selon l'invention.
> [Fig.9] La figure 9 représente une vue en perspective d'une variante de réalisation d'un organe d'accouplement selon l'invention.
> [Fig.10a] La figure 10a représente une vue schématique d'une variante de réalisation d'un capteur de couple pour moyeu selon l'invention.
> [Fig.10b] La figure 10b représente une variante de réalisation d'un capteur de couple pour moyeu selon l'invention.
> [Fig.11a] La figure 11a,
> [Fig.11b] la figure 11b et
> [Fig.11c] la figure 11c représentent des vues en perspective de différentes variantes d'un capteur de couple pour moyeu selon l'invention.
> [Fig.12a] la figure 12a et
> [Fig.12b] la figure 12b représentent des vues en perspective de différentes variantes d'un capteur de couple pour moyeu selon l'invention.

Principe général de l'invention

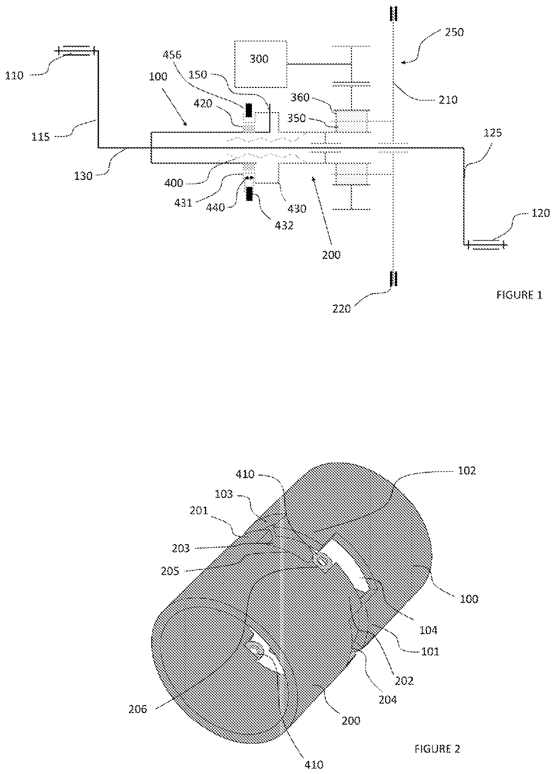

La figure 1 représente une vue schématique de la chaîne cinématique d'un pédalier selon l'invention. Le pédalier est le composant mécanique d'une bicyclette qui convertit le mouvement alternatif des jambes en un mouvement de rotation qui sera transformé en mouvement linéaire transmis à la chaine (220) qui à son tour fera tourner la roue arrière.

Deux pédales (110, 120) sont fixées chacune à une manivelle (115, 125), à l'opposé l'une de l'autre ; la rotation de l'axe (130) du pédalier entraîne indirectement un système de transmission (250) comprenant un ou plusieurs plateaux (210), qui entraîneront une chaîne (220) qui elle-même entraînera le pignon arrière (ou la roue libre ou la cassette) fixé à la roue motrice.

S'agissant d'une bicyclette à assistance électrique, la chaine cinématique comporte aussi un moteur électrique (300) qui entraîne le plateau (250) par l'intermédiaire d'une roue libre (350).

L'axe du pédalier (130) entraîne le plateau (250) par l'intermédiaire d'un organe d'accouplement constitué de deux sections (100, 200) intégrant un capteur de couple. La première section (100) est liée à l'axe du pédalier (130), par exemple par un crantage annulaire. La deuxième section (200) est liée au plateau (250). Les deux sections (100, 200) sont coaxiales et présentent un jeu angulaire permettant à l'une de tourner par rapport à l'autre. Un élément déformable élastiquement (400) est positionné entre la première section

(100) et la deuxième section (200) pour assurer l'entraînement angulaire de l'une des sections par l'autre section avec un décalage angulaire dépendant du couple appliqué entre la première et la deuxième section. Cet élément élastique peut, sans que cela ne soit exhaustif, par exemple être constitué de rondelles élastiques cylindriques, d'éléments déformables en caoutchoucs ou polymères, d'une barre de torsion, d'un tube de torsion, d'un élément ressort spirale ou lames en déformation, ou autre...

Une butée (150) prévue sur l'une des sections (100, 200) limite le débattement angulaire entre la première section (100) et la seconde section (200).

Lorsqu'un effort en rotation est appliqué sur l'une des sections (100, 200), celle-ci entraîne l'autre section en rotation avec une déformation de l'élément déformable élastiquement (400) fonction de la résistance de l'autre section et donc du couple appliqué par la section entraînante à la section entraînée. Lorsque ce couple dépasse une valeur conduisant à la déformation maximale acceptée, la butée de limitation (150) assure un accouplement « à raideur infinie » des deux sections (100, 200).

Pour un pédalier, les efforts appliqués normalement sur le pédalier varient de manière quasiment sinusoïdale en fonction de la position de la pédale entre une dizaine de newtons-mètres et une cinquantaine de newtons-mètres, voire une centaine de newtons-mètres pour un cycliste pédalant « en danseuse », et pouvant atteindre 250 à 300 newtons-mètres pour un champion cycliste. Les caractéristiques de l'accouplement selon l'invention sont de rester dans la plage de déformation de l'élément déformable élastiquement (400) jusqu'à un tel couple, la raideur étant définie en fonction du couple maximal en usage normal par exemple 250 newtons-mètres. Au-delà de cette valeur, la déformation de l'élément déformable élastiquement (400) conduit à un déplacement relatif des deux sections (100, 200) tel qu'elles arrivent en butée, et tout couple supplémentaire n'entraînera plus de rotation angulaire relative additionnelle entre les deux sections coaxiales (100, 200), les deux sections (100, 200) constituant alors un axe d'entraînement unique jusqu'à ce que le couple relatif redescende en-dessous de la valeur seuil. Cette situation de dépassement de la valeur-seuil se produit généralement de manière exceptionnelle et transitoire, par exemple lors d'un saut en VTT et conduit de fait à un écrêtage de la mesure de couple. Il est à noter que la butée de limitation

(150) a pour but principal de préserver l'élément déformable élastiquement (400) de trop fortes sollicitations pouvant conduire à une usure prématurée. Ceci est surtout valable pour une utilisation sportive « extrême » du cycle pour, par exemple, du VVT de descente ou par un champion cycliste en utilisation routière. Dans le cadre d'une application moins intensive, telle que le VTC, la butée de limitation (150) est optionnelle et son retrait conduit à une conception plus simple et moins onéreuse.

Un capteur de position angulaire à sonde magnétosensible (432) mesure la position angulaire relative de la première section (100) par rapport à la deuxième section (200).

La rotation de la première section (100) par rapport à la deuxième section (200) se fait sur la plage de déformation élastique de l'élément déformable élastiquement (400) où il est soumis à un effort croissant en fonction du décalage angulaire entre la première section (100) et la seconde section (200), puis le limiteur de course (150) entre en action et assure l'entraînement direct de la seconde section (200) par la première section (100).

De ce fait, lors du démarrage d'un effort exercé sur les pédales (110, 120), la première section (100) exerce un effort sur l'élément déformable élastiquement (400) qui se traduit par une déformation entraînant un déplacement angulaire par rapport à la deuxième section (200), jusqu'à ce que le couple atteigne une valeur entrainant une déformation de l'élément déformable élastiquement (400) correspondant à la venue en butée du limiteur de course (150). L'entraînement de la deuxième section (200) se fait alors directement par la première section (100), tant que le couple exercé dépasse la valeur seuil définie par la déformation de l'organe élastique (400) et par le limiteur de course (150).

Une structure aimantée (420) solidaire de ladite première section (100) fournit un champ magnétique canalisé par une structure ferromagnétique (431) du stator (430) solidaire de ladite deuxième section (200), la structure ferromagnétique (431) formant un entrefer (440) dans lequel est disposée une sonde magnétosensible (432), telle par exemple une sonde de Hall, mécaniquement découplée en rotation par rapport auxdites première et deuxième sections (100, 200). Ladite sonde magnétosensible (432) mesure les variations de champ magnétique inhérentes au déplacement angulaire de la structure aimantée (420) par rapport à la structure ferromagnétique (431) du stator. Afin de présenter une course angulaire totale inférieure à 2 degrés avec la résolution adéquate, la bague aimantée (420) présente une alternance de pôle Nord et Sud avec un pas polaire compris entre 3 mm et 4 mm, constituant un bon compromis entre linéarité du signal détecté, faisabilité mécanique et amplitude de variation du signal dans le contexte revendiqué. Le nombre de pôles est alors adapté en fonction du diamètre extérieur de ladite bague aimantée (420), typiquement des diamètres allant de 20 mm à 35 mm pour un nombre de pôles allant de 16 à 32.

Une seconde sonde magnétosensible (456) mécaniquement découplée en rotation par rapport auxdites première et deuxième section (100, 200) est disposée en périphérie de la structure ferromagnétique (431). Elle est apte à mesurer directement le champ magnétique émanant soit de la structure aimantée (420), soit d'une autre structure aimantée solidaire en rotation de ladite première section (100) ou seconde section (200), cette seconde sonde magnétosensible (456) fournissant une information de cadence.

A noter que tous les éléments nécessitant une alimentation en courant électrique, tels les sondes magnétosensibles (432, 456), sont fixes par rapport à la source d'énergie électrique, ils ne nécessitent donc pas l'utilisation de systèmes inductifs couteux, ou à contact glissant soumis à l'usure, pour transmettre un signal électrique à un autre élément en rotation relative.

Première variante de réalisation

Les figures 2 à 4B is représentent des vues d'une première variante de réalisation de l'organe d'accouplement et de mesure selon l'invention.

La première section (100) est constituée par une bague tubulaire raccordée par emmanchement ou par une cannelure avec l'axe (130) du pédalier.

La deuxième section (200) est constituée par une bague tubulaire raccordée par emmanchement ou par une cannelure avec l'axe du plateau (250).

Les extrémités des deux sections (100, 200) présentent des formes complémentaires permettant de transmettre le couple entre les deux sections (100, 200), avec une première zone angulaire limitée, où le couple est transmis par l'intermédiaire d'un élément déformable élastiquement composé d'inserts déformables élastiquement (410), et ensuite avec un entraînement d'une raideur infinie, par l'arrivée en butée.

La première section (100) présente une alternance de dents (101, 102) et d'encoches (103, 104), formés par découpage de la paroi tubulaire de la première section (100). Les dents (101; 102) présentent un fond de hauteur constante et des parois latérales orientés selon des plans transversaux.

La deuxième section (200) présente également une alternance de dents (201, 202) et d'encoches (203, 204), formés par découpage de la paroi tubulaire de la première section

(200). Ces encoches (203, 204) présentent deux niveaux, le premier (205) correspondant à une hauteur identique à la hauteur des dents (101, 102) de la première section ; le second niveau (206) présentant une hauteur inférieure à la hauteur des dents (101, 102) de la première section.

Un insert déformable élastiquement (410), par exemple une capsule en élastomère, est logé dans l'interstice défini par le bord longitudinal de la dent (202) de la deuxième section, le fond du second niveau (206) de l'encoche adjacente et le bord longitudinal de la dent (102) de la première section (100). La largeur angulaire $L_0$ au repos de l'insert déformable élastiquement (410) est supérieure à la largeur angulaire $L_{E2}$ du second niveau (206) de l'encoche (203) de la deuxième section (200). La différence entre les deux largeurs angulaires précitées correspond à la course de mesure $L_m$. Il est

entendu que les 2 extrémités des sections 100 et 200 peuvent présenter N inserts déformables.

La largeur angulaire $L_{D1}$ d'une dent (102) de la première section (100) est inférieure à la largeur angulaire $L_{E1}$ du premier niveau (205) de l'encoche (203) de la seconde section (200). La différence de largeur angulaire précitée correspond à la course de mesure précitée et détermine l'angle relatif avant l'engagement avec une raideur infini des deux sections (100, 200).

La relation entre les largeurs angulaires sont les suivantes :

$$L_m = L_{E1} - L_{D1}$$

$$L_{E1} + L_{E2} = L_{D1} + L_0 \text{ ou } L_{D1} = L_{E1} + L_{E2} - L_0$$

Typiquement :

$$0,1° \leq L_m \leq 2°$$

$$0,5° \leq L_0 \leq 5°.$$

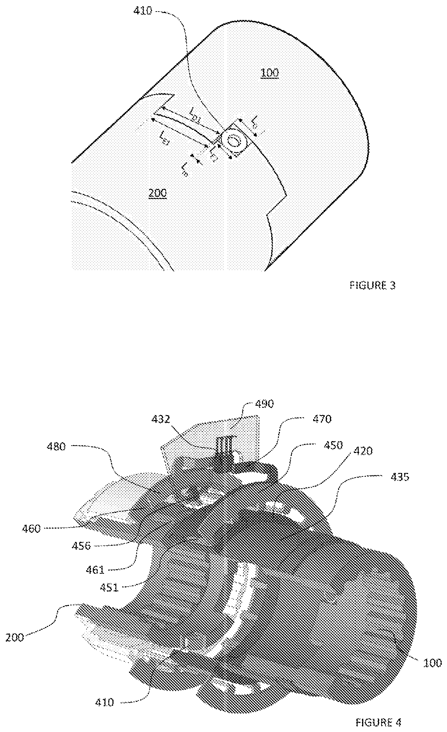

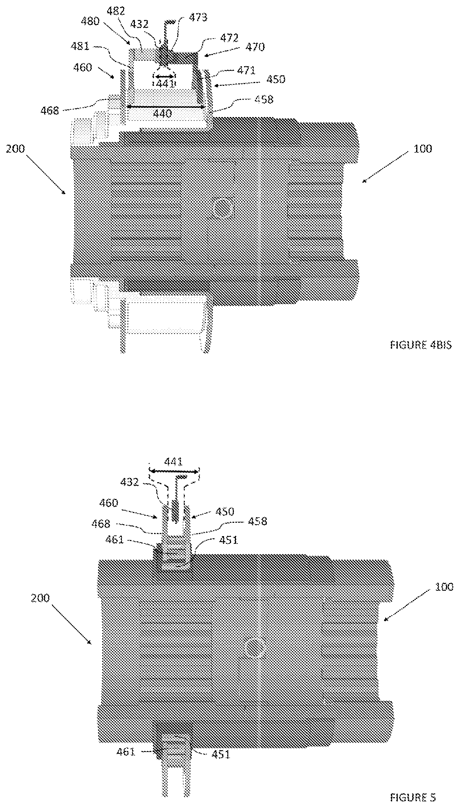

Tel qu'illustré sur les figures 4 et 4B is, le capteur angulaire présente deux collecteurs primaires (450, 460) solidaires de la seconde section (200) et définissant un entrefer (440) dans lequel sont logés des collecteurs secondaires (470, 480) fixes par rapport au cadre de la bicyclette. Ces collecteurs secondaires (470, 480) sont employés de manière à canaliser le flux magnétique en réalisant un second entrefer (441) dans lequel est logé une sonde magnétosensible (432). Le principe de fonctionnement de ce capteur est par exemple celui décrit dans le brevet EP1774272B1 de la demanderesse dont le contenu est incorporé par citation dans la présente description.

Dans l'entrefer (440) est aussi positionné une seconde sonde magnétosensible (456), par exemple une sonde de Hall, elle aussi fixe par rapport au cadre de la bicyclette. Ladite sonde magnétosensible (456) permet de détecter une ou plusieurs composantes de flux magnétique de manière à fournir un signal relatif à la position angulaire de la structure aimantée (420). On peut par exemple par mesure du flux radial avoir accès à un signal de cadence crénelé. Les deux sondes magnétosensibles (432, 456) sont avantageusement disposées sur le même circuit imprimé (490).

La figure 4B IS représente une vue de profil en coupe de l'organe d'accouplement et notamment du capteur angulaire, afin de mieux apprécier les collecteurs secondaires et les différents entrefers.

La collecte du flux magnétique est assurée par une structure ferromagnétique (431) du stator (430). Ladite structure ferromagnétique (431) est angulairement liée à la seconde section et est composée de deux collecteurs primaires (450, 460) présentant des dents disposées sur une enveloppe tubulaire, alternées, prolongées par des concentrateurs annulaires. Il s'agit de pièces formées de tôles en matériau ferromagnétique doux découpées et pliées.

Les collecteurs primaires (450, 460) sont angulairement liés à la seconde section. Ils sont chacun formés d'un concentrateur (458, 468) présentant une partie discale annulaire dans le plan transversale, prolongée par des dents (451, 461), visibles sur la figure 4B is, s'étendant perpendiculairement au plan du concentrateur (458, 468). Lesdits collecteurs primaires (450, 460) sont symétriques et décalés angulairement de manière à obtenir une imbrication de leurs dents (451, 461) et à entourer la structure aimantée (420).

Les deux concentrateurs (458, 468) définissent entre eux un entrefer dans lequel sont positionnés les collecteurs secondaires (470, 480). Le premier collecteur secondaire (470) est formé par un concentrateur annulaire (471) s'étendant parallèlement au premier concentrateur annulaire (458). Il est prolongé par au moins une patte (472) dont l'extrémité (473) est recourbée pour s'étendre dans un plan transversal, parallèlement à l'extrémité recourbée de la patte (482) prolongeant un second concentrateur annulaire (481), formant ainsi un second entrefer (441). Une sonde magnétosensible (432) est placée dans l'entrefer (441) défini par lesdites extrémités recourbées. Ladite sonde magnétosensible (432), est montée sur un circuit imprimé (490) et fournit l'information de position angulaire du stator (430) par rapport à la structure aimantée (420), le flux magnétique mesuré variant de manière sinusoïdale lorsque la structure aimantée se déplace angulairement en regard des dents (451, 461) du stator (430). De manière à exploiter plus aisément le signal mesuré, la course angulaire mesurée est restreinte à la zone autour de l'amplitude nulle du sinus mesuré pour laquelle les variations d'amplitude sont approximativement linéaires en fonction de l'angle. Une deuxième sonde magnétosensible (456) est disposée dans le premier entrefer (440) et en regard des dents (451, 461). Ladite sonde est fixe par rapport au cadre de la bicyclette et est apte à mesurer le flux magnétique de la structure aimantée (420) fuitant radialement notamment au travers des dents (451, 461), de manière à fournir, par exemple, une information de cadence.

Seconde variante de réalisation

La figure 5 représente une vue d'une seconde variante de réalisation du capteur angulaire. Ce mode de réalisation diffère du précédent présenté sur les figures 4 et 4B is en ce que les concentrateurs de flux (458, 468) ne sont pas associés à des collecteurs secondaires mais définissent directement l'entrefer (441) dans lequel est inséré la sonde de Hall (432) fournissant l'information angulaire. Cette configuration est particulièrement avantageuse lorsque l'encombrement axial du capteur doit être réduit.

Il est entendu que les deux variantes de capteur angulaire présentées ici ne sont que deux exemples mais non limitatifs de l'invention. Les brevets de la demanderesse, WO02071019A1, WO06008425A1, WO27077406A2, présentent par exemple de nombreuses autres variantes de capteur angulaire.

Troisième variante de réalisation

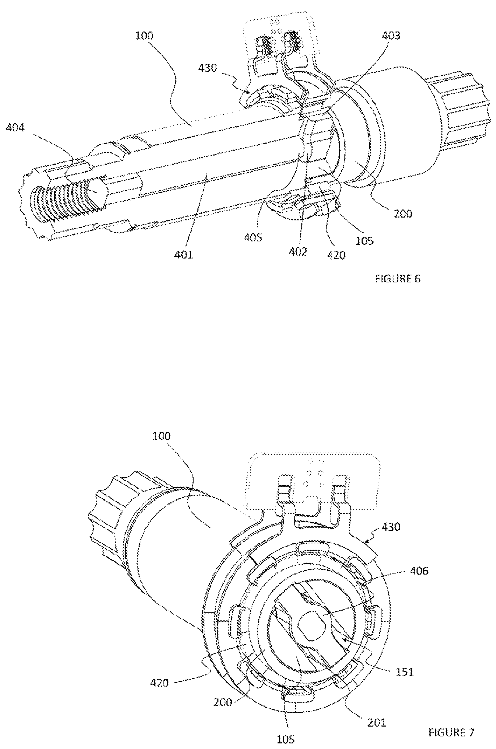

Les figures 6 à 8 représentent des vues d'une troisième variante de réalisation de l'organe d'accouplement et de mesure selon l'invention.

Ce mode de réalisation de l'organe d'accouplement diffère du premier mode de réalisation en ce que les première et deuxième sections (100, 200) de l'organe d'accouplement ne présentent plus des formes de dents complémentaires, mais coopèrent par emmanchement tubulaire glissant, la première section (100) présentant une excroissance axiale (105) de diamètre extérieur égal au diamètre intérieur de la seconde section (200), assurant un guidage de la seconde section (200) par l'excroissance axiale (150) de la première section.

Lesdites sections (100, 200) de l'organe d'accouplement sont alors accouplées à l'aide d'un arbre (401) muni d'un doigt (402), l'arbre étant logé à l'intérieur de ladite première section présentant avantageusement un ajour rectangulaire (151) dans sa section radiale de manière à recevoir ledit doigt (402).

Ledit arbre (401) est solidaire de la première section (100) sur une extrémité (404) et présente un diamètre extérieur inférieur au diamètre intérieur de la première section de manière à proposer par torsion de l'arbre une rotation du doigt situé à sa seconde extrémité (405).

Le doigt (402) présente dans la section radiale un bourrelet central (406) cylindrique d'un diamètre égal à la largeur de l'ajour rectangulaire (151). Le doigt en liaison avec la première section (100) présente alors un seul degré de liberté en rotation, sa course angulaire étant limitée par les dimensions géométriques du doigt et de l'ajour rectangulaire.

Aussi, l'accouplement desdites première et deuxièmes sections (100, 200) est obtenu par la coopération des extrémités radiales du doigt (403) avec une encoche (201) de la seconde section (200) de manière à réaliser une liaison glissière bloquant ainsi la rotation relative desdites sections permise par l'emmanchement cylindrique. Ainsi, après montage, le doigt (402) est solidaire de la seconde section (200). En corollaire, ladite seconde section (200) peut présenter un mouvement de rotation par rapport à ladite première section (100) sur une course limitée et accompagné de la torsion de l'arbre (401). Ainsi, en régime de fonctionnement normal, lorsqu'un couple est transmis par l'axe de pédalier à la première section (100), ce couple est transmis à la seconde section (200) par l'intermédiaire de l'arbre (401) et de son doigt (402) solidaire de ladite seconde section (200), l'arbre (401) se déformant en torsion proportionnellement à la valeur du couple appliqué. Lors de plus grandes déformations, le doigt (402) vient en contact avec la paroi intérieure de l'ajour (151) de la section (100). Le sur-couple est ainsi transmis directement de la première section (100) de l'arbre (401) à la seconde section (200) avec une raideur « infinie » par la coopération directe de l'ajour (151) avec le doigt (402).

Ce mode de réalisation diffère aussi du mode de réalisation précédent en ce que la structure aimantée (420) est solidaire de la seconde section (200) et le stator est solidaire de la première section (100).

Ce mode de réalisation diffère enfin en ce que le stator (430) du capteur angulaire présente une forme cannelée intérieure coopérant avec une cannelure extérieure de la première section (100) de manière à obtenir un assemblage simplifié de ces deux éléments.

Quatrième variante de réalisation

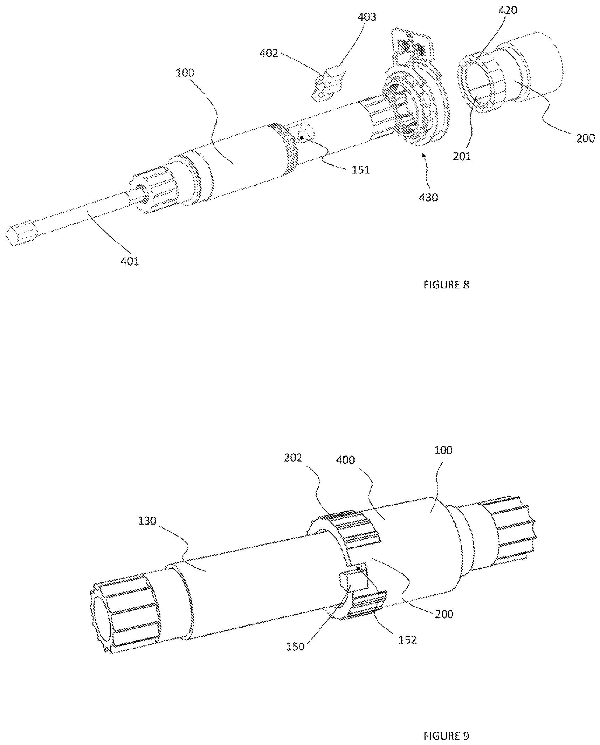

La figure 9 présente une variante de réalisation de la barre de torsion. Ce mode de réalisation diffère du premier mode de réalisation en ce que les première et seconde sections (100, 200) sont les extrémités axiales de l'élément déformable élastiquement (400). Ledit élément déformable élastiquement (400) est une forme tubulaire traversée par l'axe du pédalier (130) et solidarisé audit axe du pédalier (130) au niveau de la première section (100), la seconde section entraînant le plateau (non représenté) par l'intermédiaire d'une cannelure (202). Lors de l'application d'un couple au niveau de l'axe de pédalier (130), la déformation de l'élément déformable élastiquement (400) entraîne un décalage angulaire du stator (non représenté), solidaire de la seconde section (200), par rapport à la structure aimantée (non représentée), solidaire de la première section (100). Ledit décalage angulaire est ainsi mesurable par le capteur de position. Enfin, on note que la seconde section (200) présente une encoche (152) coopérant avec la butée (150) de manière à proposer une rigidité « infinie » au cas où un couple trop important est appliqué sur l'axe du pédalier (130), le couple étant alors transmis directement de l'axe du pédalier (130) à la seconde section (200) par l'intermédiaire de la butée (150).

Cinquième variante de réalisation

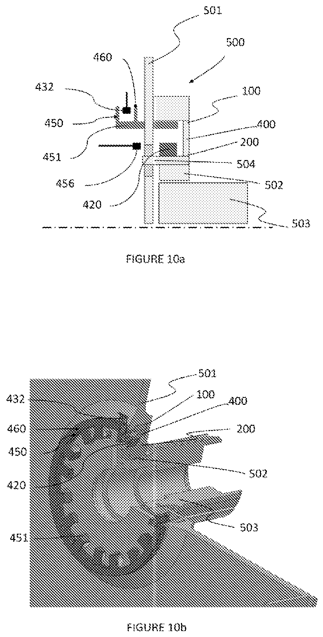

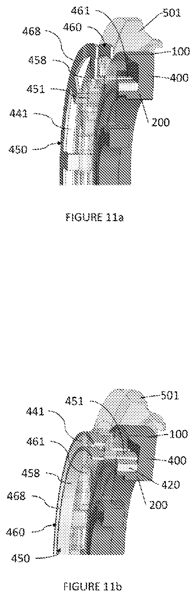

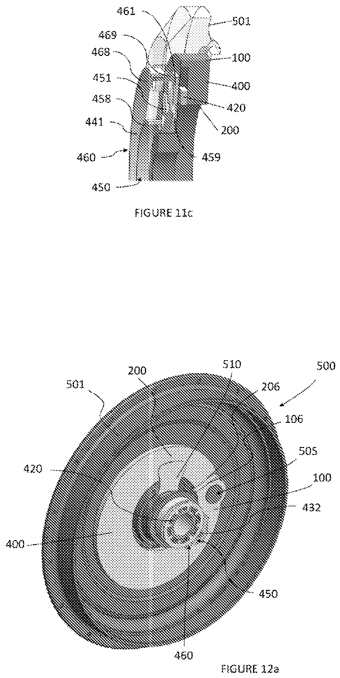

Les figures 10a, 10b, 11a, 11b, 11c, représentent une 5ème variante de réalisation d'un moyeu selon l'invention. La figure 10a en représente une vue schématique. La figure 10b en représente un exemple d'intégration. Le moyeu (500) de la roue entrainée supporte la structure magnétique du capteur de position, ou de déformations, fournissant les informations de couple et de cadence. L'élément déformable élastiquement (400) est solidaire, à une de ses extrémités (100), du corps du moyeu (501) et, à son autre extrémité (200), d'un mécanisme de roue libre (502), ledit mécanisme de roue libre (502) étant en liaison avec le corps support (503) de la roue, de manière à transmettre le couple de manière unidirectionnelle entre ledit corps support (503) et ledit élément déformable élastiquement (400), ledit corps support (503) étant lié mécaniquement au pédalier. En régime d'utilisation normale, le couple fournit par l'utilisateur au niveau du pédalier est transmis de manière unidirectionnelle vers la bande de roulement au travers de l'élément déformable élastiquement (400), le corps du moyeu (501) étant solidaire de la bande de roulement. En cas de couple trop important, ledit élément déformable élastiquement (400) se déforme jusqu'à la mise en contact d'une prolongation axiale (504), solidaire de l'extrémité (200), avec le corps de moyeu (501). Le sur-couple est alors transmis directement du mécanisme de roue libre (502) au corps de moyeu (501) par l'intermédiaire de ladite prolongation axiale (504) réalisant une butée.

Comme pour les modes de réalisation précédents, la mesure de couple est obtenue grâce à une sonde magnétosensible (432), placée entre dans un entrefer (441) défini par deux collecteurs primaire (450) et secondaire (460) mécaniquement liés à la première section (100) de l'élément déformable élastiquement (400) et collectant le flux de la structure aimantée (420), ladite structure aimantée (420) étant mécaniquement liée à la seconde section (200) de l'élément déformable élastiquement (400). Afin d'obtenir l'information de cadence, une seconde sonde magnétosensible (456) permet de détecter le flux de la structure aimantée (420) fuitant axialement au travers du corps du moyeu (501). Les deux sondes magnétosensibles (432, 456), étant fixes par rapport au cadre de la bicyclette, peuvent avantageusement être assemblées sur une même carte électronique.

Les figures 11a, 11b et 11c permettent d'apprécier différentes variantes des collecteurs primaire (450) et secondaire (460). Lesdits collecteurs sont constitués de concentrateurs (458, 468) prolongés par des dents (451, 461) captant radialement le flux de la structure aimantée (420) à travers de multiples ouvertures axiales du corps du moyeu (501), comme montré dans les figures 11a et 11b. Ces deux figures se démarquent par l'agencement des concentrateurs (458, 468) en ce qu'ils définissent un entrefer (441) radial dans la figure 11a et un entrefer (441) axial dans la figure 11b. Comme représenté par la figure 11c, le flux de la structure aimantée (420) peut aussi être collecté de manière axiale, les dents (458, 468) s'épanouissant alors radialement et de manière opposée depuis des concentrateurs annulaires (459, 469) concentriques. Ce mode de réalisation permet avantageusement de minimiser le nombre d'ouvertures axiales présentes dans le corps du moyeu pour acheminer le flux collecté vers les concentrateurs (458, 468) définissant l'entrefer (441).

Sixième variante de réalisation

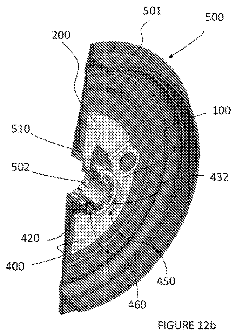

Les figures 12a et 12b presentent une variante de réalisation d'un moyeu selon l'invention. Comme pour le mode de réalisation précédent, le moyeu (500) de la roue entrainée supporte la structure magnétique du capteur de déformations fournissant les informations de couple et de cadence. Ce mode de réalisation diffère néanmoins en ce que l'élément déformable élastiquement (400) présente une forme de disque sectionné pour présenter deux extrémités radiales (100, 200). L'élément déformable élastiquement (400) est lié à une de ses extrémités (100), au corps du moyeu (501) au travers d'une protubréance axiale (505) et, à son autre extrémité (200), au mécanisme de roue libre (502) au travers d'une pièce tubulaire (510) présentant une excroissance radiale s'encastrant dans l'élément déformable élastiquement (400). Ledit mécanisme de roue libre (502) est en liaison avec le corps support de la roue (non représenté), de manière à transmettre le couple de manière unidirectionnelle entre ledit corps support et ledit élément déformable élastiquement (400), ledit corps support étant lié mécaniquement au pédalier. En régime d'utilisation normale, le couple fournit par l'utilisateur au niveau du pédalier est transmis de manière unidirectionnelle vers la bande de roulement au travers de l'élément déformable élastiquement (400), le corps du moyeu (501) étant solidaire de la bande de roulement. En cas de couple trop important, ledit élément déformable élastiquement (400) se déforme tangentiellement jusqu'à la mise en contact de la paroie radiale (106), de sa première extrémité (100), contre la paroie radiale (206) de sa seconde extrémité (200). Le sur-couple est alors transmis directement du mécanisme de roue libre (502) au corps de moyeu (501) par l'intermédiaire des paroies radiales (106 et 206) alors en contact. Lorsque ces paroies radiales (106 et 206) sont en contact, la raideur devient alors très élevée.

Comme pour les modes de réalisation précédents, la mesure de couple est obtenue grâce à une sonde magnétosensible (432), placée entre dans un entrefer (441) défini par deux collecteurs primaire (450) et secondaire (460) mécaniquement liés à la première section (100) de l'élément déformable élastiquement (400) et collectant le flux de la structure aimantée (420), ladite structure aimantée (420) étant mécaniquement liée à la seconde section (200) de l'élément déformable élastiquement (400), la sonde magnétosensibles (432) étant fixe par rapport au cadre de la bicyclette.

## Revendications

1. Organe d'entrainement de cycle présentant un capteur de couple, comprenant un axe de pédalier (130) ou un moyeu (500) relié à un plateau (250) par un organe d'accouplement, d'entrainement et de mesure, présentant une première section (100) solidaire en rotation dudit axe de pédalier (130) ou moyeu (500) et une seconde section (200) reliée audit plateau (250), un aimant permanent supportée par l'une desdites sections (100, 200) ledit organe d'accouplement intégrant un dispositif de détection de couple où

  ○ lesdites première et deuxième sections coopèrent par un élément déformable élastiquement (400),
  ○ ledit dispositif de détection de couple comporte une sonde magnétosensible (432) fixe mesurant un champ magnétique fonction de la position angulaire relative desdites première et deuxième sections et apte à convertir le dit champ magnétique en un signal électrique, la mesure de champ magnétique étant effectuée en une position axiale unique de la périphérie desdites première et deuxième sections de manière indépendante de la rotation dudit axe de pédalier (130) ou moyeu (500), **caractérisé en ce que** ledit capteur de couple est un capteur angulaire comprennant :
  ○ une première structure aimanté comprenant une pluralité de pôles aimantés, solidaire de l'une desdites sections (100, 200), et
  ○ une seconde structure solidaire de la deuxième desdites sections (200, 100), comprenant deux couronnes concentriques prolongées de dents imbriquées,
  ○ lesdites deux couronnes concentriques définissant au moins un entrefer dans lequel est placé au moins la sonde magnétosensible (432) fournissant un signal électrique fonction du champ magnétique collecté.

2. Organe d'entrainement selon la revendication précédente **caractérisé en ce que** la structure aimantée comprend une pluralité d'aimants sous la forme d'une bague ou d'un disque aimanté présentant un pas polaire de 3 mm à 4 mm.

3. Organe d'entrainement selon l'une quelconque des revendications 1 et 2 **caractérisé en ce que** ledit entrefer est réalisé par une structure collectrice constituée de deux pièces de fermeture de flux insérées entre les couronnes concentriques.

4. Organe d'entrainement selon l'une des revendications précédentes **caractérisé en ce que** lesdites première et deuxième sections coopèrent d'une part par ledit élément déformable élastiquement (400) et d'autre part par une butée (150) limitant la course angulaire résultant de la déformation élastique dudit moyen d'accouplement.

5. Organe d'entrainement selon l'une des revendications précédentes **caractérisé en ce que** ledit élément déformable élastiquement (400) est constitué d'un accouplement à mâchoires comprenant au moins un insert déformable élastiquement (410).

**6.** Organe d'entrainement selon l'une des revendications 1 à 4 **caractérisé en ce que** ladite première section est solidaire de l'élément déformable élastiquement (400) coopérant avec un lardon de transmission traversant une lumière formée dans ladite première section pour former une butée mécanique (150), l'extrémité dudit lardon étant engagée dans une cannelure longitudinale de la deuxième section.

**7.** Organe d'entrainement selon l'une des revendications précédentes **caractérisé en ce qu'**il comporte un capteur additionnel disposé à proximité de ladite première structure aimantée et coopérant avec la bague aimantée (420) pour fournir une information de position ou de cadence.

**8.** Organe d'entrainement selon l'une des revendications précédentes **caractérisé en ce que** ladite seconde section (200) est reliée audit plateau (250) par l'intermédiare d'une roue libre (350).

**9.** Système mécatronique d'assistance au pédalage présentant un organe d'entrainement selon l'une des revendications précédentes **caractérisé en ce que** le dispositif de détection de couple commande l'assistance électrique au pédalage fournie par un moteur électrique (300) audit plateau (250) ou au corps support de la roue arrière (503).

**10.** Système mécatronique d'assistance au pédalage selon la revendication précédente **caractérisé en ce que** ledit moteur électrique (300) est relié mécaniquement audit plateau (250) ou au corps support de la roue arrière (503) par l'intermédiaire d'une roue libre (360, 502).

**11.** Système mécatronique d'assistance au pédalage selon l'une quelconque des revendications 9 et 10 **caractérisé en ce que** le moteur électrique est un moteur électrique sans balais à aimants permanents.

**12.** Système mécatronique d'assistance au pédalage selon l'une quelconque des revendications 9 à 11 **caractérisé en ce que** les électroniques de commande du moteur électrique et du capteur angulaire soient intégrées sur le même support.

**13.** Système mécatronique d'assistance au pédalage selon l'une quelconque des revendications 9 à 12 **caractérisé en ce que** la commande du moteur électrique est réalisée avec un capteur additionnel fournissant une information de position ou de cadence.

**14.** Système mécatronique d'assistance au pédalage selon l'une quelconque des revendications 9 à 12 **caractérisé en ce que** le moteur électrique (300) et le capteur de couple sont intégrés dans un module présentant une connectique électrique simplifiée.

**15.** Système mécatronique d'assistance au pédalage selon la revendication précédente **caractérisé en ce que** ledit module est intégré à une roue et apte à être monté sur un cycle du commerce.

**Patentansprüche**

**1.** Fahrradantriebsorgan mit einem Drehmomentsensor, das eine Tretlagerachse (130) oder eine Nabe (500) umfasst, die mit einem Kettenblatt (250) über ein Kupplungs-, Antriebs- und Messorgan verbunden ist, die einen ersten Abschnitt (100), der drehfest mit der Tretlagerachse (130) oder Nabe (500) verbunden ist, und einen zweiten Abschnitt (200), der mit dem Kettenblatt (250) verbunden ist, aufweist, wobei ein Permanentmagnet von einem der Abschnitte (100, 200) getragen wird, wobei das Kupplungsorgan eine Drehmomenterfassungsvorrichtung integriert oder

   o der erste und der zweite Abschnitt durch ein elastisch verformbares Element (400) zusammenwirken,
   o die genannte Drehmomenterfassungsvorrichtung eine magnetosensitive feststehende Sonde (432) umfasst, die ein Magnetfeld in Abhängigkeit von der Winkelposition des ersten und zweiten Abschnitts misst und geeignet ist, das Magnetfeld in ein elektrisches Signal umzuwandeln, wobei die Magnetfeldmessung an einer einzigen axialen Position des Umfangs des ersten und zweiten Abschnitts unabhängig von der Drehung der Tretlagerachse (130) oder Nabe (500) durchgeführt wird,

   **dadurch gekennzeichnet, dass** der Drehmomentsensor ein Winkelsensor ist, umfassend:

   o eine erste Magnetstruktur, die eine Vielzahl von Magnetpolen umfasst und fest mit einem der Abschnitte (100, 200) verbunden ist, und
   o eine zweite Struktur, die fest mit dem zweiten der genannten Abschnitte (200, 100) verbunden ist und zwei verlängerte konzentrische Kränze aus ineinandergreifenden Zähnen umfasst,
   o wobei die beiden konzentrischen Kränze mindestens einen Luftspalt definieren, in dem mindestens die magnetosensitive Sonde (432) angeordnet ist die ein elektrisches Signal liefern, das eine Funktion des gesammelten Magnetfelds ist.

**2.** Antriebsorgan nach dem vorstehenden Anspruch, **dadurch gekennzeichnet, dass** die Magnetstruktur eine Vielzahl von Magneten in Form eines Magnetrings oder einer Magnetscheibe mit einem Polabstand von 3 mm bis 4 mm umfasst.

3. Antriebsorgan nach einem der Ansprüche 1 und 2, **dadurch gekennzeichnet, dass** der Luftspalt durch eine Sammelstruktur realisiert wird, die aus zwei zwischen konzentrischen Ringen eingefügten Flussverschlussteilen besteht.

4. Antriebsorgan nach einem der vorstehenden Ansprüche, **dadurch gekennzeichnet, dass** der erste und der zweite Abschnitt einerseits durch das elastisch verformbare Element (400) und andererseits durch einen Anschlag (150) zusammenwirken, der den Winkelweg begrenzt, der sich aus der elastischen Verformung des Kupplungsmittels ergibt.

5. Antriebsorgan nach einem der vorstehenden Ansprüche, **dadurch gekennzeichnet, dass** das elastisch verformbare Element (400) aus einer Backenkupplung besteht, die mindestens einen elastisch verformbaren Einsatz (410) umfasst.

6. Antriebsorgan nach einem der Ansprüche 1 bis 4, **dadurch gekennzeichnet, dass** der erste Abschnitt fest mit dem elastisch verformbaren Element (400) verbunden ist, das mit einer Übertragungsleiste zusammenwirkt, die ein in dem ersten Abschnitt gebildetes Langloch durchquert, um einen mechanischen Anschlag (150) zu bilden, wobei das Ende der Übertragungsleiste in eine Längsnut des zweiten Abschnitts eingreift.

7. Antriebsorgan nach einem der vorstehenden Ansprüche, **dadurch gekennzeichnet, dass** es einen zusätzlichen Sensor umfasst, der in der Nähe der ersten magnetischen Struktur angeordnet ist und mit dem magnetischen Ring (420) zusammenwirkt, um eine Positions- oder Taktinformation zu liefern.

8. Antriebsorgan nach einem der vorstehenden Ansprüche, **dadurch gekennzeichnet, dass** der zweite Abschnitt (200) über einen Freilauf (350) mit der Platte (250) verbunden ist.

9. Mechatronisches Tretunterstützungssystem mit einem Antriebsorgan nach einem der vorstehenden Ansprüche, **dadurch gekennzeichnet, dass** die Drehmomenterfassungsvorrichtung die elektrische Tretunterstützung steuert, die von einem Elektromotor (300) an das Kettenblatt (250) oder den Trägerkörper des Hinterrads (503) geliefert wird.

10. Mechatronisches Tretunterstützungssystem nach dem vorstehenden Anspruch, **dadurch gekennzeichnet, dass** der Elektromotor (300) mechanisch mit dem Kettenblatt (250) oder dem Trägerkörper des Hinterrads (503) über einen Freilauf (360, 502) verbunden ist.

11. Mechatronisches Tretunterstützungssystem nach einem der Ansprüche 9 und 10, **dadurch gekennzeichnet, dass** der Elektromotor ein bürstenloser Elektromotor mit Permanentmagneten ist.

12. Mechatronisches Tretunterstützungssystem nach einem der Ansprüche 9 bis 11, **dadurch gekennzeichnet, dass** die Steuerelektronik des Elektromotors und des Winkelsensors auf demselben Träger integriert sind.

13. Mechatronisches Tretunterstützungssystem nach einem der Ansprüche 9 bis 12, **dadurch gekennzeichnet, dass** die Steuerung des Elektromotors mit einem zusätzlichen Sensor erfolgt, der eine Positions- oder Trittfrequenzinformation liefert.

14. Mechatronisches Tretunterstützungssystem nach einem der Ansprüche 9 bis 12, **dadurch gekennzeichnet, dass** der Elektromotor (300) und der Drehmomentsensor in ein Modul integriert sind, das eine vereinfachte elektrische Verbindungstechnik aufweist.

15. Mechatronisches Tretunterstützungssystem nach dem vorstehenden Anspruch, **dadurch gekennzeichnet, dass** das Modul in ein Rad integriert ist und geeignet ist, an einem handelsüblichen Fahrrad montiert zu werden.

**Claims**

1. A cycle drive having a torque sensor, comprising a crank axle (130) or a hub (500) connected to a plate (250) by a coupling, driving and measuring member, having a first section (100) which rotates as one with said crank axle (130) or hub (500) and a second section (200) connected to the plate (250), a permanent magnet supported by one of said sections (100, 200), said coupling member incorporating a torque detection device, or

   o said first and second sections cooperate through an elastically deformable element (400),
   o said torque detection device comprises a fixed magneto-sensitive probe (432) which measures a magnetic field according to the relative angular position of said first and second sections and is capable of converting said magnetic field into an electrical signal, the magnetic field measurement being performed at a single axial position in the periphery of said first and second sections independently of the rotation of the crank axle (130) or hub (500),

**characterised in that** said torque sensor is an angular sensor comprising:

> o a first magnetised structure comprising a plurality of magnetised poles, as one with one of said sections (100, 200), and
> o a second structure as one with the second of said sections (200, 100), comprising two extended concentric rings of interlocking teeth,
> o said two concentric rings defining at least one air-gap in which at least the magneto-sensitive probe (432) is placed, providing an electrical signal according to the collected magnetic field.

2. The drive according to the preceding claim, **characterised in that** the magnetised structure comprises a plurality of magnets in the form of a magnetised ring or disc having a polar pitch of 3mm to 4mm.

3. The drive according to any one of claims 1 and 2, **characterised in that** said air-gap is made by a collecting structure, constituted of two flow closing parts, inserted between the concentric rings.

4. The drive according to any one of the preceding claims, **characterised in that** said first and second sections cooperate, on the one hand, by said elastically deformable element (400), and on the other hand, by an abutment (150) limiting the angular stroke resulting from the elastic deformation of said coupling means.

5. The drive according to any one of the preceding claims, **characterised in that** said elastically deformable element (400) is constituted of a jaw coupling comprising at least one elastically deformable insert (410).

6. The drive according to any one of claims 1 to 4, **characterised in that** said first section is as one with the elastically deformable element (400) cooperating with a transmission gib passing through a space formed in said first section to form a mechanical abutment (150), the end of said gib being engaged in a longitudinal groove of the second section.

7. The drive according to any one of the preceding claims, **characterised in that** it comprises an additional sensor disposed in the proximity of said first magnetised structure and cooperating with the magnetised ring (420) to form positional or cadence information.

8. The drive according to any one of the preceding claims, **characterised in that** said second section (200) is connected to said plate (250) through a free wheel (350).

9. A mechatronic system for assisting with pedalling having a drive according to any one of the preceding claims, **characterised in that** the torque detection device controls the electrical assistance for pedalling provided by an electric motor (300) to said plate (250) or to the support body of the rear wheel (503).

10. The mechatronic system for assisting with pedalling according to the preceding claim, **characterised in that** said electric motor (300) is mechanically connected to said plate (250) or to the support body of the rear wheel (503) through a free wheel (360, 502).

11. The mechatronic system for assisting with pedalling according to any one of claims 9 and 10, **characterised in that** the electric motor is a permanent magnet brushless electric motor.

12. The mechatronic system for assisting with pedalling according to any one of claims 9 to 11, **characterised in that** the control electronics of the electric motor and of the angular sensor are incorporated on the same support.

13. The mechatronic system for assisting with pedalling according to any one of claims 9 to 12, **characterised in that** controlling the electric motor is done with an additional sensor providing positional or cadence information.

14. The mechatronic system for assisting with pedalling according to any one of claims 9 to 12, **characterised in that** the electric motor (300) and the torque sensor are incorporated in a module having a simplified electrical connector.

15. The mechatronic system for assisting with pedalling according to the preceding claim, **characterised in that** said module is incorporated with a wheel and capable of being mounted on a cycle on the market.

FIGURE 1

FIGURE 2

FIGURE 3

FIGURE 4

FIGURE 4BIS

FIGURE 5

FIGURE 6

FIGURE 7

FIGURE 8

FIGURE 9

FIGURE 10a

FIGURE 10b

FIGURE 11a

FIGURE 11b

461
501
469
468
100
451
400
458
420
441
200
460
459
450

FIGURE 11c

501
200
510
500
206
106
420
505
100
432
400
450
460

FIGURE 12a

FIGURE 12b

**EP 4 182 652 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012010344 A1
- WO 2012055129 A
- EP 2225543 B1
- WO 2009127263 A1
- EP 1774272 B1
- WO 02071019 A1
- WO 06008425 A1
- WO 27077406 A2